# FASCICULE DE BREVET EUROPEEN

(11) **EP 0 680 220 B1**
(45) Date de publication et mention de la délivrance du brevet: **28.03.2001**
(21) Numéro de dépôt: 95410037.6
(22) Date de dépôt: 25.04.1995
(51) Int. Cl.: H04N 7/36, H04N 5/14

(54) **Dispositif et procédé d'adressage d'une mémoire cache d'un circuit de compression d'images mobiles**
Verfahren und Vorrichtung zur Cachespeicheradressierung einer Bewegtbildkompressionsschaltung
Apparatus and method for addressing a cache-memory of a moving picture compression circuit

(30) Priorité: 27.04.1994 FR 9405339
(43) Date de publication de la demande: 02.11.1995
(73) Titulaire: STMicroelectronics S.A., 94250 Gentilly (FR)
(72) Inventeur: Herluison, Jean-Claude, F-38660 Lumbin (FR); Bauer, Jean-Luc, F-68280 Sundhoffen (FR)
(74) Mandataire: de Beaumont, Michel

(56) Documents cités:
- EP-A- 0 309 251
- EP-A- 0 395 293
- MICROPROCESSORS AND MICROSYSTEMS, vol. 17, no. 7, Septembre 1993 pages 425-434, XP 000397915 A. RICHARDSON AND M. QUEROL 'STi 3220 motion estimator processor'
- IEEE TRANSACTIONS ON CIRCUITS AND SYSTEMS FOR VIDEO TECHNOLOGY, vol. 2, no. 2, Juin 1992 NEW YORK, pages 111-122, XP 000280651 P.A. RUETZ ET AL. 'A high-performance full-motion video compression chip set'

## Description

La présente invention se rapporte à un circuit de compression d'images mobiles, telles que des images de télévision. Elle concerne plus particulièrement l'utilisation des mémoires caches que comporte un tel circuit pour réaliser une estimation de mouvement de portions d'images, une portion d'une image courante étant comparée à son environnement dans l'image précédente.

Un circuit de ce type est utilisé pour coder les images afin qu'elles puissent être transmises dans le cadre d'une transmission d'images de télévision, en minimisant le nombre d'informations à transmettre. La compression qu'il réalise consiste, entre autres, à effectuer une estimation de mouvement entre des portions de deux images successives. Cette estimation de mouvement permet de coder, et donc transmettre, pour des portions d'une image courante, préexistantes dans l'image précédente, seulement des vecteurs de mouvement associés à ces portions. Chaque vecteur mouvement caractérise le déplacement d'une portion d'une image courante par rapport à la portion correspondante de l'image précédente.

Pour ce faire, les images, par exemple issues d'une caméra vidéo, sont découpées en portions d'image appelées "macroblocs". Ces macroblocs correspondent généralement à un découpage de l'image en carrés, chaque carré ayant une dimension de 16x16 pixels. En fait, une image est stockée séquentiellement ligne par ligne dans une mémoire vidéo, et les pixels ainsi mémorisés sont extraits de cette mémoire vidéo par ensembles de pixels correspondant à des portions carrées de l'image. Ces ensembles de pixels, ou macroblocs, sont rangés dans une mémoire cache, pour être utilisés par un processeur de calcul chargé, entre autres, de déterminer le vecteur de mouvement du macrobloc considéré. Le recours aux mémoires caches est lié au fait que le processeur de calcul effectue une série de comparaisons sur un même macrobloc de l'image. On réduit ainsi les besoins d'accès à la mémoire vidéo, ce qui accroît la vitesse de traitement des images.

Pour réaliser l'estimation de mouvement, le processeur de calcul doit disposer, non seulement des pixels du macrobloc considéré de l'image courante, mais également de pixels entourant le macrobloc correspondant de l'image précédente. Le processeur de calcul traite séquentiellement chaque macrobloc de l'image courante constituant une fenêtre courante, en utilisant, au moins partiellement, les pixels des macroblocs voisins de l'image précédente constituant une fenêtre de référence dans l'image précédente. Ainsi, une mémoire cache contient une fenêtre courante, et une autre mémoire cache contient une fenêtre de référence plus grande qui comprend, outre les pixels de ce macrobloc dans l'image précédente, une partie des pixels des macroblocs de l'image précédente qui lui sont séquentiellement voisins.

L'article "A High-Performance Full-Motion Video Compression Chip Set" de Peter A. Ruetz et al., paru dans IEEE Transactions on Circuits and Systems for Video Technology, Vol. 2, N° 2 en juin 1992, pages 111-122, décrit un circuit de compression d'images mobiles du type auquel se rapporte l'invention.

L'article "STi 3220 motion estimation processor" de A. Richardson et al., paru dans Microprocessors and Microsystems, Vol. 17, N° 7 en septembre 1993, pages 425-434, prévoit, dans une estimation de mouvement effectuée en séquence, fenêtre après fenêtre, de réutiliser une partie de la fenêtre de référence introduite dans le circuit de compression pour le traitement de la fenêtre courante précédente.

L'adressage classique des mémoires caches consiste à charger une fenêtre courante et une fenêtre de référence dans les mémoires caches avant chaque série de comparaisons servant à l'estimation du mouvement du macrobloc considéré.

Plus généralement, la présente invention se rapporte à l'utilisation d'une mémoire cache dans un processus opératoire faisant intervenir plusieurs ensembles de valeurs présentant entre eux un lien séquentiel. Elle s'applique plus particulièrement à un processus opératoire devant réaliser une série d'opérations sur deux ensembles de valeurs. Le premier ensemble correspond à un ensemble de valeurs courantes et le second ensemble correspond à un ensemble de valeurs de référence, au moins une partie de l'ensemble de référence étant utilisée pour la série d'opérations relative à l'ensemble suivant de valeurs courantes.

Un objet de la présente invention est de minimiser les temps de chargement de la mémoire cache contenant les valeurs de référence, dans un processus opératoire du type ci-dessus.

Pour atteindre cet objet, la présente invention prévoit un dispositif d'adressage d'une mémoire cache d'un circuit de compression d'images mobiles, exécutant des séries de comparaisons pour estimer le mouvement d'une fenêtre courante de pixels d'une image courante par rapport à une fenêtre de référence prise dans l'image précédente, comportant une première mémoire cache partitionnée en quatre segments physiques de tailles identiques, chaque segment physique étant propre à contenir un demi-macrobloc de la fenêtre de référence, et des moyens pour réaliser un adressage de la mémoire cache qui soit différent pour une estimation de mouvement relative à une fenêtre courante de rang pair et pour une estimation de mouvement relative à une fenêtre courante de rang impair.

Selon un mode de réalisation de la présente invention, le dispositif comporte en outre une seconde mémoire cache propre à contenir un macrobloc de pixels de l'image courante constituant la fenêtre courante, et des moyens pour charger cette seconde mémoire cache, préalablement à chaque estimation de mouvement, avec des pixels d'une nouvelle fenêtre courante.

Selon un mode de réalisation de la présente invention, le dispositif comporte également des moyens pour charger, préalablement à chaque estimation de mouvement, deux des quatre segments de la première mémoire cache, les deux derniers demi-macroblocs d'une fenêtre de référence étant chargés, respectivement, dans les deux derniers segments pour une estimation de mouvement de rang pair, et dans les deux premiers segments pour une estimation de mouvement de rang impair.

Selon un mode de réalisation de la présente invention, le dispositif comporte en outre des moyens pour lire la première mémoire cache, en affectant le contenu des deux premiers segments, respectivement, aux deux premiers demi-macroblocs de la fenêtre de référence pour une estimation de mouvement de rang pair, et aux deux derniers demi-macroblocs de la fenêtre de référence pour une estimation de mouvement de rang impair, le contenu des deux derniers segments étant respectivement affecté, aux deux derniers demi-macroblocs de la fenêtre de référence pour une estimation de mouvement de rang pair, et aux deux premiers demi-macroblocs de la fenêtre de référence pour une estimation de mouvement de rang impair.

L'invention prévoit également un procédé de compression d'images mobiles, du type réalisant une estimation de mouvement d'un macrobloc de pixels d'une image courante, et comportant une première mémoire cache qui contient une fenêtre de référence comprenant outre le macrobloc courant dans l'image précédente, les deux demi-macroblocs entourant ce dernier séquentiellement, dans l'image précédente, consistant à partitionner la mémoire cache en quatre segments physiques de tailles identiques propres à contenir, chacun, un demi-macrobloc de la fenêtre de référence, et à réaliser un adressage de la première mémoire cache qui soit différent pour une estimation de mouvement d'un macrobloc courant de rang pair et pour une estimation de mouvement d'un macrobloc courant de rang impair.

Selon un mode de réalisation de la présente invention, le procédé consiste à adresser, pour une estimation de mouvement de rang pair, les deux premiers segments physiques comme contenant les deux premiers demi-macroblocs et les deux derniers segments physiques comme contenant les deux derniers demi-macroblocs de la fenêtre de référence et, pour une estimation de mouvement de rang impair, les deux derniers segments physiques comme contenant les deux premiers demi-macroblocs et les deux premiers segments physiques comme contenant les deux derniers demi-macroblocs de la fenêtre de référence.

Selon un mode de réalisation de la présente invention, le procédé consiste, entre chaque estimation de mouvement, à charger dans la seconde mémoire cache un macrobloc de pixels d'une image courante et, dans la première mémoire cache, deux demi-macroblocs de l'image précédente, deux autres demi-macroblocs de la fenêtre de référence ayant été chargés pour l'estimation de mouvement portant sur le macrobloc de l'image courante.

Selon un mode de réalisation de la présente invention, le procédé utilise une machine d'état de commande du processus opératoire pour effectuer les calculs d'adresses de la première mémoire cache.

L'invention prévoit en outre un procédé d'adressage d'une mémoire cache destinée à être utilisée par un processus opératoire exécutant une série d'opérations sur deux ensembles de valeurs, un premier ensemble correspondant à un ensemble de valeurs courantes et un second ensemble correspondant à un ensemble de valeurs de référence stockées dans ladite mémoire cache, au moins une partie de l'ensemble de référence étant utilisée pour une série d'opérations relative à un ensemble suivant de valeurs courantes, ce procédé consistant à partitionner la mémoire cache en quatre segments physiques de tailles identiques propres à contenir, chacun, un sous-ensemble logique de l'ensemble de valeurs de référence, et à réaliser un adressage de la mémoire cache qui soit différent pour une série d'opérations de rang pair et pour une série d'opérations de rang impair.

Selon un mode de réalisation de la présente invention, le procédé consiste à adresser, pour une série d'opérations de rang pair, les deux premiers segments physiques comme contenant les deux premiers sous-ensembles logiques et les deux derniers segments physiques comme contenant les deux derniers sous-ensembles logiques et, pour une série d'opérations de rang impair, les deux derniers segments physiques comme contenant les deux premiers sous-ensembles logiques et les deux premiers segments physiques comme contenant les deux derniers sous-ensembles logiques.

Le fait, selon la présente invention, d'effectuer un adressage de la mémoire cache qui soit différent pour les estimations de mouvement, ou séries de comparaisons de rang pair et pour les estimations de mouvement, ou séries de comparaisons de rang impair, permet de minimiser les temps de chargement de la mémoire cache.

En effet, la moitié d'une fenêtre de référence stockée dans la mémoire cache pour une série de comparaisons de rang "i" portant sur une fenêtre courante peut être réutilisée pour la série suivante de comparaisons de rang "i+1" portant sur la fenêtre courante suivante. On n'a donc plus, comme c'était le cas précédemment, à charger l'ensemble d'une fenêtre de référence avant chaque série de comparaisons. Il suffit désormais de charger la moitié de cette fenêtre entre chaque estimation de mouvement, l'invention permettant de réutiliser chaque moitié d'une fenêtre de référence pendant deux séries de comparaisons successives.

L'invention réduit presque de moitié le temps de chargement de la première mémoire cache du circuit de compression d'images mobiles, entre deux estimations de mouvement. Il n'est désormais nécessaire de charger une fenêtre de référence complète, soit l'équivalent de deux macroblocs, qu'au passage d'une rangée de macroblocs à la suivante ou au début d'une nouvelle image.

Ces objets, caractéristiques et avantages ainsi que d'autres de la présente invention seront exposés en détail dans la description suivante de modes de mise en oeuvre particuliers faite à titre non limitatif en relation avec les figures jointes parmi lesquelles :
la figure 1 représente schématiquement un exemple d'implantation de mémoires caches d'un circuit de compression d'images mobiles selon l'invention ;
la figure 2 représente schématiquement un exemple de mode de chargement d'une mémoire cache, selon l'invention, pour réaliser une estimation de mouvement d'une rangée de macroblocs d'une image mobile ; et
la figure 3 représente schématiquement deux ensembles de valeurs séquentiellement liés du type de ceux auxquels s'applique la présente invention.

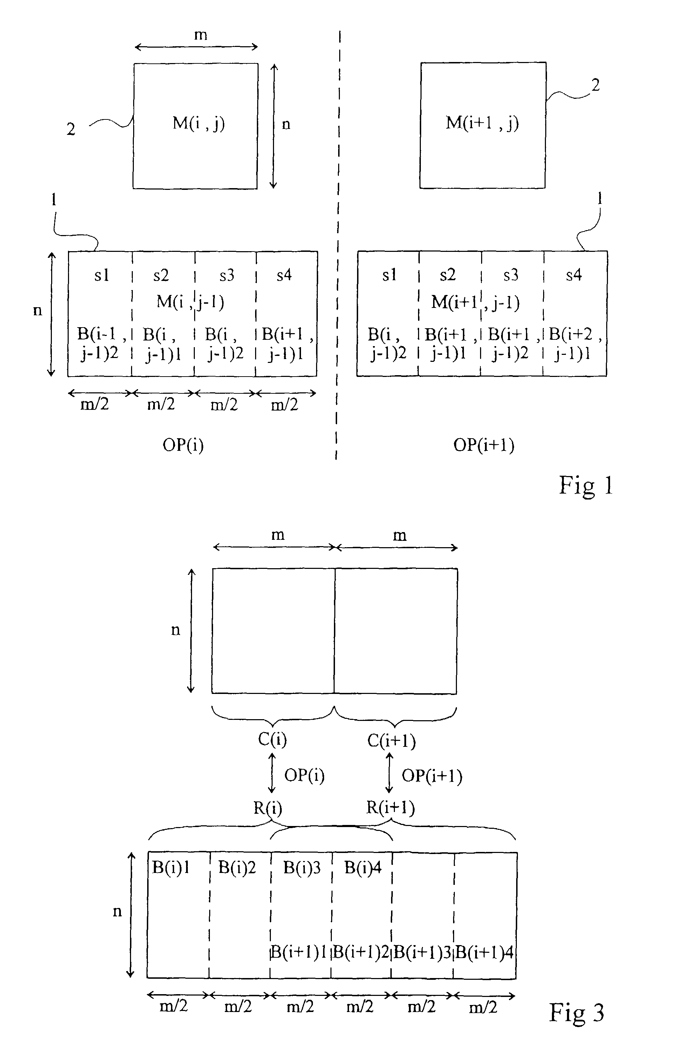

Dans l'exemple représenté à la figure 1, un macrobloc M(i,j), constitué d'une matrice de "m" x "n" pixels d'une image courante I(j), constitue une fenêtre courante C(i) à laquelle doit être appliqué un processus de comparaison visant à estimer le mouvement de ce macrobloc par rapport à une image précédente I(j-1). Ce macrobloc M(i,j) est stocké dans une mémoire cache 2. La comparaison est effectuée par rapport à une fenêtre de référence R(i), constituée d'une matrice de "n" lignes et "2m" colonnes. Cette fenêtre de référence R(i) correspond à deux macroblocs de l'image précédente I(j-1). Elle comprend outre le macrobloc M(i,j-1), l'équivalent de deux demi-macroblocs de pixels entourant séquentiellement ce dernier dans l'image précédente I(j-1). Ces pixels correspondent à une seconde moitié B(i-1,j-1)2 du macrobloc M(i-1,j-1) et à une première moitié B(i+1,j-1)1 du macrobloc M(i+1,j-1) de l'image précédente I(j-1). La fenêtre de référence R(i) est partitionnée en quatre demi-macroblocs B(i-1,j-1)2, B(i,j-1)1, B(i,j-1)2, B(i+1,j-1)1, contenant chacun une matrice de pixels de "n" lignes et "m/2" colonnes. Chaque demi-macrobloc est contenu dans un segment physique s1, s2, s3, s4, d'une mémoire cache 1 partitionnée à cet effet. L'estimation de mouvement consiste à effectuer une série de comparaisons OP(i) sur ces deux fenêtres d'images C(i) et R(i). Une comparaison élémentaire est exécutée sur un couple de macroblocs M(i,j), {B(i-1,j-1)2, B(i,j-1)1}, puis par glissement d'une colonne à chaque comparaison élémentaire, jusqu'au couple de macroblocs M(i,j), {B(i,j-1)2, B(i+1,j-1)1}. L'indice "i" désigne la position séquentielle, ou rang, du macrobloc dans l'image, et l'indice "j" désigne le rang de l'image.

En pratique, l'estimation de mouvement étant réalisée dans toutes les directions de l'image, on compare une fenêtre courante par rapport à une fenêtre de référence correspondant à quatre macroblocs. Le macrobloc M(i,j) est en effet comparé en tenant compte des demi-macroblocs entourant sa position dans l'image précédente I(j-1) dans toutes les directions. Par soucis de clarté du présent exposé, on ne considère que les déplacements séquentiels dans la direction horizontale de l'image. L'estimation dans la direction verticale s'effectuant de la même manière, en répétant des séries de comparaisons, en décalant ligne par ligne les couples de macroblocs pris dans la fenêtre de référence.

La présente invention se base sur l'observation selon laquelle deux séries de comparaisons, ou estimations de mouvement, successives OP(i) et OP(i+1) font appel à deux macroblocs successifs disjoints M(i,j) et M(i+1,j) de l'image courante I(j), mais à deux fenêtres de référence R(i) et R(i+1) jointes. Les deux fenêtres de référence R(i) et R(i+1) sont séquentiellement liées : elles possèdent deux demi-macroblocs communs B(i,j-1)2 et B(i+1,j-1)1. En d'autres termes, les deux derniers demi-macroblocs d'une fenêtre de référence R(i) correspondent aux deux premiers demi-macroblocs de la fenêtre de référence R(i+1) suivante.

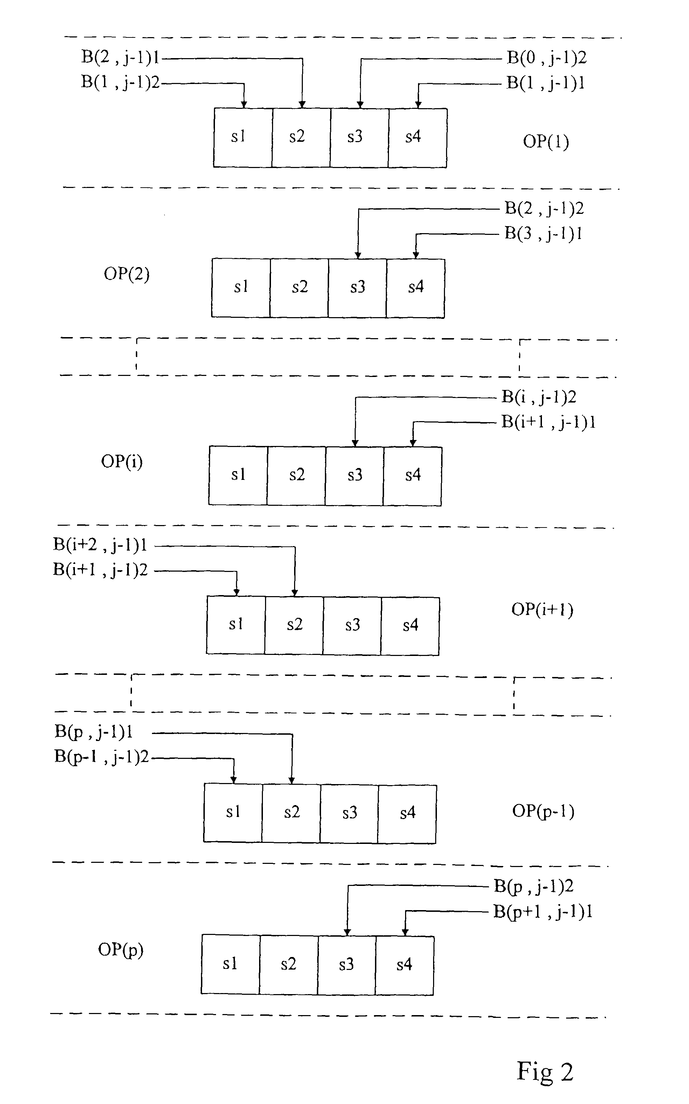

La figure 2 illustre les chargements effectués dans la mémoire cache 1 pour l'estimation de mouvement d'une rangée de macroblocs de l'image courante.

Après une première série de comparaisons OP(1) pour laquelle les quatre demi-macroblocs B(0,j-1)2, B(1,j-1)1, B(1,j-1)2, et B(2,j-1)1 ont été rangés respectivement dans les segments s3, s4, s1, et s2, on ne charge plus, pour chaque série de comparaisons, que les deux derniers demi-macroblocs de la fenêtre de référence R(i), dans la mémoire cache 1.

Pour l'exécution de la série de comparaisons OP(2), on range dans les segments s3 et s4, les deux demi-macroblocs B(2,j-1)2 et B(3,j-1)1, les deux demi-macroblocs B(1,j-1)2 et B(2,j-1)1 étant déjà présents dans les segments s1 et s2 pour avoir servi à la série de comparaisons OP(1), en tant que les deux derniers demi-macroblocs de la fenêtre de référence R(1). On adresse alors les deux premiers segments s1 et s2 comme contenant respectivement les deux premiers demi-macroblocs B(1,j-1)2 et B(2,j-1)1 de la fenêtre R(2), et les deux derniers segments s3 et s4 comme contenant respectivement les deux derniers demi-macroblocs B(2,j-1)2 et B(3,j-1)1 de la fenêtre R(2).

Pour l'exécution d'une série de comparaisons OP(i), dite de rang pair, on range dans les segments s3 et s4, les demi-macroblocs B(i,j-1)2 et B(i+1,j-1)1, les demi-macroblocs B(i-1,j-1)2 et B(i,j-1)1 étant déjà présents dans les segments s1 et s2 de la mémoire cache 1 pour avoir servi à la série précédente de comparaisons OP(i-1) en tant que les deux derniers demi-macroblocs de la fenêtre de référence R(i-1). On adresse alors les deux premiers segments s1 et s2 comme contenant respectivement deux premiers demi-macroblocs B(i-1,j-1)2 et B(i,j-1)1 de la fenêtre R(i), et les deux derniers segments s3 et s4 comme contenant respectivement les deux derniers demi-macroblocs B(i,j-1)2 et B(i+1,j-1)1 de la fenêtre R(i).

Pour l'exécution d'une série d'opérations OP(i+1), dite de rang impair, on range dans les segments s1 et s2, les demi-macroblocs B(i+1,j-1)2 et B(i+2,j-1)1, les demi-macroblocs B(i,j-1)2 et B(i+1,j-1)1 étant déjà présents dans les segments s3 et s4 de la mémoire cache 1 pour avoir servi à la série précédente de comparaisons OP(i) en tant que les deux derniers demi-macroblocs de la fenêtre de référence R(i). On adresse alors les deux premiers segments s1 et s2 comme contenant respectivement les deux derniers demi-macroblocs B(i+1,j-1)2 et B(i+2,j-1)1 de la fenêtre R(i+1), et les deux derniers segments s3 et s4 comme contenant respectivement les deux premiers demi-macroblocs B(i,j-1)2 et B(i+1,j-1)1 de la fenêtre R(i+1).

Le processus opératoire comportant "p" séries de comparaisons, correspondant au nombre de macroblocs par rangée de macroblocs dans l'image, ce mode de chargement se poursuit jusqu'à la série de comparaisons OP(p). Dans l'exemple représenté à la figure 2, on a supposé que le processus opératoire devait effectuer un nombre "p", pair, de séries de comparaisons, ou estimations de mouvement, OP(i). Le mode de chargement et d'adressage est similaire en cas de nombre impair de séries de comparaisons OP(i). De même, on a supposé que la première série de comparaisons OP(1) était de rang impair, mais on aurait tout aussi bien pu mettre en oeuvre ce procédé avec une première série de comparaisons de rang pair.

Les calculs d'adresses qui doivent être réalisés pour la mise en oeuvre de l'invention, peuvent l'être, par exemple, dans une machine d'état de commande du processus opératoire.

Comme on le voit, l'invention permet de ne charger, pour l'estimation de mouvement d'une rangée de "p" macroblocs de l'image courante, que l'équivalent de "p+1", macroblocs de pixels, soit l'équivalent de "(p+1)/2" fenêtres de référence alors qu'il fallait précédemment charger "p" fenêtres de référence, soit l'équivalent de "2p" macroblocs.

Dans une mise en oeuvre de la présente invention adaptée à un système de vidéophone, un macrobloc correspond à une matrice carrée de 16x16 pixels, un demi-macrobloc correspondant à une matrice de 16x8 pixels.

L'exposé ci-dessus, appliqué à un processus d'estimation de mouvement d'images mobiles, peut se généraliser à tout processus opératoire faisant intervenir deux ensembles successifs et disjoints C(i) et C(i+1) de valeurs courantes, et deux ensembles joints R(i) et R(i+1) de valeurs de référence.

La figure 3 illustre cette généralisation en représentant un exemple de deux ensembles de valeurs séquentiellement liés du type de ceux auxquels peut s'appliquer la présente invention.

Dans cet exemple, un ensemble de valeurs courantes C(i), constitué d'une matrice "n" lignes et "m" colonnes, constitue l'un des opérandes d'un processus opératoire OP(i) dont le second opérande est constitué par un ensemble de valeurs de référence R(i). Ce dernier est constitué d'une matrice de "n" lignes et "2m" colonnes partitionnée en quatre sous-ensembles logiques B(i)1, B(i)2, B(i)3, et B(i)4 correspondant chacun à une matrice de "n" lignes et "m/2" colonnes. Le processus opératoire consiste à effectuer une série d'opérations OP(i) sur ces deux ensembles de valeurs C(i) et R(i). Une opération élémentaire est exécutée sur un couple de matrices de tailles identiques, par exemple sur le couple de matrices C(i), {B(i)2, B(i)3}. La série d'opérations est exécutée sur le couple de matrices C(i), {B(i)1, B(i)2}, puis par glissement d'une colonne à chaque opération élémentaire, jusqu'au couple de matrices C(i), {B(i)3, B(i)4}. Les deux ensembles R(i) et R(i+1) sont séquentiellement liés, les sous-ensembles B(i+1)1 et B(i+1)2 correspondent respectivement aux sous-ensembles B(i)3 et B(i)4.

Les ensembles de valeurs de référence R(i) et courantes C(i) sont rangés dans des mémoires caches, pour être utilisés par un processeur de calcul réalisant la série d'opérations.

Pour l'exécution d'une série d'opérations OP(i), dite de rang pair, on range dans les segments s3 et s4 d'une mémoire cache, les sous-ensembles logiques B(i)3 et B(i)4, les sous-ensembles B(i)1 et B(i)2 étant déjà présents dans les segments s1 et s2 de la mémoire cache pour avoir servi à la série précédente d'opérations OP(i-1) en tant que les sous-ensembles B(i-1)3 et B(i-1)4. On adresse alors les deux premiers segments s1 et s2 comme contenant respectivement les sous-ensembles B(i)1 et B(i)2, et les deux derniers segments s3 et s4 comme contenant respectivement les sous-ensembles B(i)3 et B(i)4.

Pour l'exécution d'une série d'opérations OP(i+1), dite de rang impair, on range dans les segments s1 et s2 de la mémoire cache, les sous-ensembles logiques B(i+1)3 et B(i+1)4, les sous-ensembles B(i+1)1 et B(i+1)2 étant déjà présents dans les segments s3 et s4 de la mémoire cache pour avoir servi à la série précédente d'opérations OP(i) en tant que sous-ensembles B(i)3 et B(i)4. On adresse alors les deux premiers segments s1 et s2 comme contenant respectivement les sous-ensembles B(i+1)3 et B(i+1)4, et les deux derniers segments s3 et s4 comme contenant respectivement les sous-ensembles B(i+1)1 et B(i+1)2.

Bien entendu, la présente invention est susceptible de diverses variantes et modifications qui apparaîtront à l'homme de l'art.

En particulier, elle peut s'appliquer à tout type de processus opératoire, qu'il soit à base de comparateurs, d'additionneurs, de soustracteurs, ..., ou de toute combinaison d'opérateurs élémentaires. De même, les ensembles de valeurs peuvent correspondre à des matrices de tailles quelconques, carrées ou rectangulaires. En outre, l'invention a été décrite en considérant que deux sous-ensembles de valeurs de référence étaient communs à deux ensembles séquentiellement voisins, on pourrait également prévoir qu'un nombre quelconque de sous-ensembles d'un ensemble de référence soient communs à l'ensemble de référence suivant.

## Revendications

1. Circuit de compression d'images mobiles, exécutant des séries de comparaisons (OP(i)) pour estimer le mouvement d'une fenêtre courante (C(i)) de pixels d'une image courante (I(j)) par rapport à une fenêtre de référence (R(i)) prise dans l'image précédente (I(j-1)), caractérisé en ce qu'il comporte une première mémoire cache (1) partitionnée en quatre segments physiques (s1, s2, s3, s4) de tailles identiques, chaque segment physique étant propre à contenir un demi-macrobloc (B(i-1,j-1)2, B(i,j-1)1, B(i,j-1)2, B(i+1,j-1)1) de la fenêtre de référence (R(i)), et des moyens pour réaliser un adressage de la mémoire cache (1) qui soit différent pour une estimation de mouvement (OP(i)) relative à une fenêtre courante (C(i)) de rang pair et pour une estimation de mouvement (OP(i+1)) relative à une fenêtre courante (C(i+1)) de rang impair, le rang d'une fenêtre étant fonction de sa position séquentielle dans l'image.

2. Circuit de compression d'images mobiles selon la revendication 1, caractérisé en ce qu'il comporte une seconde mémoire cache (2) propre à contenir un macrobloc (M(i,j)) de pixels de l'image courante (I(j)) constituant la fenêtre courante (C(i)), et des moyens pour charger cette seconde mémoire cache (2), préalablement à chaque estimation de mouvement (OP(i)), avec des pixels d'une nouvelle fenêtre courante (C(i)).

3. Circuit de compression d'images mobiles selon la revendication 1 ou 2, caractérisé en ce qu'il comporte des moyens pour charger, préalablement à chaque estimation de mouvement (OP(i)), deux des quatre segments (s1, s2, s3, s4) de la première mémoire cache (1), les deux derniers demi-macroblocs (B(i,j-1)2, B(i+1,j-1)1) d'une fenêtre de référence (R(i)) étant chargés, respectivement, dans les deux derniers segments (s3, s4) pour une estimation de mouvement (OP(i)) de rang pair, et dans les deux premiers segments (sl, s2) pour une estimation de mouvement (OP(i+1)) de rang impair.

4. Circuit de compression d'images mobiles selon la revendication 3, caractérisé en ce qu'il comporte des moyens pour lire la première mémoire cache (1), en affectant le contenu des deux premiers segments (s1, s2), respectivement, aux deux premiers demi-macroblocs (B(i-1,j-1)2, B(i,j-1)1) de la fenêtre de référence (R(i)) pour une estimation de mouvement (OP(i)) de rang pair, et aux deux derniers demi-macroblocs (B(i+1,j-1)2, B(i+2,j-1)1) de la fenêtre de référence (R(i+1)) pour une estimation de mouvement (OP(i+1)) de rang impair, le contenu des deux derniers segments (s3, s4) étant respectivement affecté, aux deux derniers demi-macroblocs (B(i,j-1)2, B(i+1,j-1)1) de la fenêtre de référence (R(i)) pour une estimation de mouvement (OP(i)) de rang pair, et aux deux premiers demi-macroblocs (B(i,j-1)2, B(i+1,j-1)1) de la fenêtre de référence (R(i+1)) pour une estimation de mouvement (OP(i+1)) de rang impair.

5. Procédé de compression d'images mobiles, du type réalisant une estimation de mouvement (OP(i)) d'un macrobloc de pixels (M(i,j)) d'une image courante (I(j)), et comportant une première mémoire cache (1) qui contient une fenêtre de référence (R(i)) comprenant outre le macrobloc courant (M(i,j-1)) dans l'image précédente (I(j-1)), les deux demi-macroblocs (B(i-1,j-1)2, B(i+1,j-1)1) entourant ce dernier séquentiellement, dans l'image précédente (I(j-1)), caractérisé en ce qu'il consiste à partitionner la mémoire cache (1) en quatre segments physiques (s1, s2, s3, s4) de tailles identiques propres à contenir, chacun, un demi-macrobloc (B(i-1,j-1)2, B(i,j-1)1, B(i,j-1)2, B(i+1,j-1)1) de la fenêtre de référence (R(i)), et à réaliser un adressage de la première mémoire cache (1) qui soit différent pour une estimation de mouvement (OP(i)) d'un macrobloc courant (M(i,j)) de rang pair et pour une estimation de mouvement (OP(i+1)) d'un macrobloc courant (M(i+1,j)) de rang impair, le rang d'un macrobloc étant fonction de sa position séquentielle dans l'image.

6. Procédé de compression d'images mobiles selon la revendication 5, caractérisé en ce qu'il consiste à adresser, pour une estimation de mouvement de rang pair (OP(i)), les deux premiers segments physiques (s1, s2) comme contenant les deux premiers demi-macroblocs (B(i-1,j-1)2, B(i,j-1)1) et les deux derniers segments physiques (s3, s4) comme contenant les deux derniers demi-macroblocs (B(i,j-1)2, B(i+1,j-1)1) de la fenêtre de référence (R(i)) et, pour une estimation de mouvement de rang impair (OP(i+1)), les deux derniers segments physiques (s3, s4) comme contenant les deux premiers demi-macroblocs (B(i,j-1)2, B(i+1,j-1)1) et les deux premiers segments physiques (s1, s2) comme contenant les deux derniers demi-macroblocs (B(i+1,j-1)2, B(i+2,j-1)1) de la fenêtre de référence (R(i+1)).

7. Procédé de compression d'images mobiles selon la revendication 6, caractérisé en ce qu'il consiste, entre chaque estimation de mouvement (OP(i)), à charger dans la seconde mémoire cache (2) un macrobloc (M(i,j)) de pixels d'une image courante (I(j)) et, dans la première mémoire cache (1), deux demi-macroblocs (B(i,j-1)2), (B(i+1,j-1)1) de l'image précédente (I(j-1)), deux autres demi-macroblocs (B(i-1,j-1)2), (B(i,j-1)1) de la fenêtre de référence (R(i)) ayant été chargés pour l'estimation de mouvement (OP(i-1)) portant sur le macrobloc (M(i-1,j)) de l'image courante (I(j)).

8. Procédé de compression d'images mobiles selon l'une quelconque des revendications 5 à 7, caractérisé en ce qu'il utilise une machine d'état de commande du processus opératoire pour effectuer les calculs d'adresses de la première mémoire cache (1) .

9. Procédé d'adressage d'une mémoire cache (1) destinée à être utilisée par un processus opératoire exécutant une série d'opérations (OP(i)) sur deux ensembles de valeurs (C(i), R(i)), un premier ensemble correspondant à un ensemble de valeurs courantes (C(i)) et un second ensemble correspondant à un ensemble de valeurs de référence (R(i)) stockées dans ladite mémoire cache (1), au moins une partie de l'ensemble de référence (R(i)) étant utilisée pour une série d'opérations (OP(i+1)) relative à un ensemble suivant de valeurs courantes (C(i+1)), caractérisé en ce qu'il consiste à partitionner la mémoire cache (1) en quatre segments physiques (s1, s2, s3, s4) de tailles identiques propres à contenir, chacun, un sous-ensemble logique ((B(i)1, B(i)2, B(i)3, B(i)4) de l'ensemble de valeurs de référence (R(i)), et à réaliser un adressage de la mémoire cache (1) qui soit différent pour une série d'opérations (OP(i)) de rang pair et pour une série d'opérations de rang impair (OP(i+1)), le rang d'une série d'opérations étant fonction de la position séquentielle de la série d'opérations dans une séquence de série d'opérations.

10. Procédé d'adressage selon la revendication 9, caractérisé en ce qu'il consiste à adresser, pour une série d'opérations de rang pair (OP(i)), les deux premiers segments physiques (s1, s2) comme contenant les deux premiers sous-ensembles logiques (B(i)1, B(i)2) et les deux derniers segments physiques (s3, s4) comme contenant les deux derniers sous-ensembles logiques (B(i)3, B(i)4) et, pour une série d'opérations de rang impair (OP(i+1)), les deux derniers segments physiques (s3, s4) comme contenant les deux premiers sous-ensembles logiques (B(i+1)1, B(i+1)2) et les deux premiers segments physiques (s1, s2) comme contenant les deux derniers sous-ensembles logiques (B(i+1)3, B(i+1)4).

## Claims

1. A motion picture compression circuit, executing series of comparisons (OP(i)) to estimate the motion of a current window (C(i)) of pixels of a current picture (I(j)) with respect to a reference window (R(i)) of a preceding picture (I(j-1)), characterized in that it includes a first cache memory (1) partitioned into four physical segments (s1, s2, s3, s4) of equal size, each physical segment being adapted to contain one half-macroblock (B(i-1,j-1)2, B(i,j-1)1, B(i,j-1)2, B(i+1,j-1)1) of the reference window (R(i)), and means for addressing the first cache memory (1), the addressing being different for a motion estimation (OP(i)) related to a current window (C(i)) of even rank and for a motion estimation (OP(i+1)) related to a current window (C(i+1)) of odd rank, the rank of a window being a function of its sequential position in the picture.

2. The motion picture compression circuit of claim 1, characterized in that it includes a second cache memory (2) to contain a macroblock (M(i,j)) of pixels of the current picture (I(j)) constituting the current window (C(i)), and means for loading said second cache memory (2), before each motion estimation (OP(i)), with pixels of a new current window (C(i)).

3. The motion picture compression circuit of claim 1 or 2, characterized in that it includes means for loading, before each motion estimation (OP(i)), two of the four segments (s1, s2, s3, s4) of the first cache memory (1), the last two half-macroblocks (B(i,j-1)2, B(i+1,j-1)1) of a reference window (R(i)) being loaded, respectively, in the last two segments (s3, s4) for a motion estimation (OP(i)) of even rank, and in the first two segments (s1, s2) for a motion estimation (OP(i+1)) of odd rank.

4. The motion picture compression circuit of claim 3, including means for reading the first cache memory (1), by assigning the content of the first two segments (s1, s2), respectively, to the first two half-macroblocks (B(i-1,j-1)2, B(i,j-1)1) of the reference window (R(i)) for a motion estimation (OP(i)) of even rank, and to the last two half-macroblocks (B(i+1,j-1)2, B(i+2,j-1)1) of the reference window (R(i+1)) for a motion estimation (OP(i+1)) of odd rank, the content of the last two segments (s3, s4) being respectively assigned to the last two half-macroblocks (B(i,j-1)2, B(i+1,j-1)1) of the reference window (R(i)) for a motion estimation (OP(i)) of even rank and to the first two half-macroblocks (B(i,j-1)2, B(i+1,j-1)1) of the reference window (R(i+1)) for a motion estimation (OP(i+1)) of odd rank.

5. A method for compressing motion pictures, executing a motion estimation (OP(i)) of a macroblock of pixels (M(i,j)) of a current picture (I(j)), and including a first cache memory (1) which stores a reference window (R(i)) including, in addition to the current macroblock (M(i,j-1)) in the preceding picture (I(j-1)), the two half-macroblocks (B(i-1,j-1)2, B(i+1,j-1)1) sequentially surrounding the latter, in the preceding picture (I(j-1)), characterized in that it consists in partitioning the first cache memory (1) into four physical segments (s1, s2, s3, s4) of equal size, each segment being adapted to contain one half-macroblock (B(i-1,j-1)2, B(i,j-1)1, B(i,j-1)2, B(i+1,j-1)1) of the reference window (R(i)), and in addressing of the first cache memory (1) is different for a motion estimation (OP(i)) of a current macroblock (M(i,j)) of even rank and for a motion estimation (OP(i+1)) of a current macroblock (M(i+1,j)) of odd rank, the rank of a macroblock being a function of its sequential position in the picture.

6. The method for compressing motion pictures of claim 5, characterized in that it includes addressing, for a motion estimation (OP(i)) of even rank, the first two physical segments (s1, s2) as containing the first two half-macroblocks (B(i-1,j-1)2, B(i,j-1)1) and the last two physical segments (s3, s4) as containing the last two half-macroblocks (B(i,j-1)2, B(i+1,j-1)1) of the reference window (R(i)) and, for a motion estimation (OP(i+1)) of odd rank, the last two physical segments (s3, s4) as containing the first two half-macroblocks (B(i,j-1)2, B(i+1,j-1)1) and the first two physical segments (s1, s2) as containing the last two half-macroblocks (B(i+1,j-1)2, B(i+2,j-1)1) of the reference window (R(i+1)).

7. The method for compressing motion pictures of claim 6, characterized in that it includes, between each motion estimation (OP(i)), loading in a second cache memory (2) a macroblock (M(i,j)) of pixels of a current picture (I(j)) and, in the first cache memory (1), two half-macroblocks (B(i,j-1)2, B(i+1,j-1)1) of the preceding picture (I(j-1)), two other half-macroblocks (B(i-1,j-1)2, B(i,j-1)1) of the reference window (R(i)) having been loaded for the motion estimation (OP(i-1)) related to the macroblock (M(i-1,j)) of the current picture (I(j)).

8. The method for compressing motion pictures of any of claims 5 to 7, characterized in that it uses a state machine for controlling the calculation process of the addresses of the first cache memory (1).

9. A method for addressing a cache memory (1) designed to be used in a process executing a series of operations (OP(i)) on two sets of values (C(i), R(i)), a first set corresponding to a set of current values (C(i)) and a second set corresponding to a set of reference values (R(i)) stored in said cache memory (1), at least one portion of the reference set (R(i)) being used for a series of operations (OP(i+1)) related to a following set of current values (C(i+1), characterized in that it includes the steps of partitioning the cache memory (1) into four physical segments (s1, s2, s3, s4) of equal size, each segment being adapted to contain one logic subset (B(i)1, (B(i)2, (B(i)3, (B(i)4) of the set of reference values (R(i)), and addressing the cache memory (1) differently for a series of operations (OP(i)) of even rank and for a series of operations (OP(i+1)) of odd rank, the rank of operations being a function of the sequential position of series of operations in a sequence of series of operations.

10. The addressing method of claim 9, characterized in that it includes addressing, for a series of operations (OP(i)) of even rank, the first two physical segments (s1, s2) as containing the first two logic sub-sets (B(i)1, B(i)2) and the last two physical segments (s3, s4) as containing the last two logic sub-sets (B(i)3, B(i)4) and, for a series of operations (OP(i+1)) of odd rank, the last two physical segments (s3, s4) as containing the first two logic sub-sets (B(i+1)1, B(i+1)2) and the first two physical segments (s1, s2) as containing the last two logic sub-sets (B(i+1)3, B(i+1)4).

## Patentansprüche

1. Schaltung zum Komprimieren beweglicher Bilder, welche Serien von Vergleichen (OP(i)) zur Abschätzung der Bewegung eines jeweiligen laufenden Fensters (C(i)) von Pixeln eines jeweils laufenden Bilds (I(j)) relativ bezüglich einem in dem vorhergehenden Bild (I(j-1)) aufgenommenen Bezugsfenster (R(i)) ausführt, **dadurch gekennzeichnet**, daß die Schaltung umfaßt: einen ersten Cache-Speicher (1), der in vier körperliche Segmente (s1, s2, s3, s4) gleicher Abmessungen unterteilt ist, wobei jeweils jedes körperliche Segment zur Aufnahme eines Halb-Makroblocks (B(i-1,j-1)2, B(i,j-1)1, B(i,j-1)2, B(i+1,j-1)1) des Bezugsfensters (R(i)) geeignet ist; sowie Mittel zur Durchführung einer Adressierung des Cache-Speichers (1), die jeweils verschieden ist für eine Bewegungsabschätzung (OP(i)) bezüglich einem laufenden Fenster (C(i)) von geradem Rang, und für eine Bewegungsabschätzung (OP(i+1)) bezüglich einem laufenden Fenster (C(i+1)) von ungeradem Rang, wobei der Rang eines Fensters eine Funktion seiner sequentiellen Lage in dem Bild ist.

2. Schaltung zur Kompression beweglicher Bilder, nach Anspruch 1, dadurch gekennzeichnet, daß sie einen zweiten Cache-Speicher (2) aufweist, der zur Aufnahme eines das laufende Fenster (C(i)) bildenden Makroblocks (M(i,j)) von Pixeln des laufenden Bilds (I(j)) geeignet ist, sowie Mittel zum Laden dieses zweiten Cache-Speichers (2) jeweils vor jeder Bewegungsabschätzung (OP(i)) mit Pixeln eines neuen laufenden Fensters (C(i)).

3. Schaltung zur Kompression beweglicher Bilder nach Anspruch 1 oder Anspruch 2, dadurch gekennzeichnet, daß die Schaltung Mittel aufweist, um jeweils vor jeder Bewegungsabschätzung (OP(i)) zwei der vier Segmente (s1, s2, s3, s4) des ersten Cache-Speichers (1) zu laden, wobei die zwei letzten Halb-Makroblöcke (B(i,j-1)2, B(i+1,j-1)1) eines Bezugsfensters (R(i)) jeweils in die zwei letzten Segmente (s3, s4) für eine Bewegungsabschätzung (OP(i)) von geradem Rang, bzw. in die beiden ersten Segmente (s1, s2) für eine Bewegungsabschätzung (OP(i+1)) von ungeradem Rang geladen werden.

4. Schaltung zur Kompression beweglicher Bilder, nach Anspruch 3, dadurch gekennzeichnet, daß die Schaltung Mittel zum Lesen des ersten Cache-Speichers (1) aufweist, unter Zuordnung des Inhalts der beiden ersten Segmente (s1, s2) jeweils zu den beiden ersten Halb-Makroblöcken (B(i-1,j-1)2, B(i,j-1)1) des Bezugsfensters (R(i)) für eine Bewegungsabschätzung (OP(i+1)) von geradem Rang, bzw. zu den beiden letzten Halb-Makroblöcken (B(i+1,j-1)2, , B(i+2,j-1)1) des Bezugsfensters (R(i)) für eine Bewegungsabschätzung (OP(i+1)) von ungeradem Rang, wobei der Inhalt der beiden letzten Segmente (s3, s4) jeweils den beiden letzten Halb-Makroblöcken (B(i,j-1)2, B(i+1,j-1)1) des Bezugsfensters (R(i)) für eine Bewegungsabschätzung (OP(i)) von geradem Rang, bzw. den beiden ersten Makro-Halbblöcken (B(i,j-1)2, B(i+1,j-1)1) des Bezugsfensters (R(i+1) für eine Bewegungsabschätzung (OP(i+1)) von ungeradem Rang zugeordnet werden.

5. Verfahren zum Komprimieren beweglicher Bilder, vom Typ mit Durchführung einer Bewegungsabschätzung (OP(i)) eines Makroblocks (M(i,j)) von Pixeln eines laufenden Bilds (I(j)), wobei das Verfahren einen ersten Cache-Speicher (1) aufweist, der ein Bezugsfenster (R(i)) enthält, das außer dem laufenden Makroblock (M(i,j)) in dem vorhergehenden Bild (I(j-1)) die beiden diesen Makroblock sequentiell in dem vorhergehenden Bild (I(j-1)) umgebenden Halb-Makroblöcke (B(i-1,j-1)2, B(i+1,j-1)1) umfaßt, dadurch gekennzeichnet, daß das Verfahren in der Unterteilung des Cache-Speichers (1) in vier körperliche Segmente (s1, s2, s3, s4) gleicher Größe, deren jedes jeweils einen Halb-Makroblock (B(i-1,j-1)2, B(i,j-1)1, B(i,j-1)2, B(i+1,j-1)1) des Bezugsfensters (R(i)) aufzunehmen vermag, sowie in der Durchführung einer Adressierung des ersten Cache-Speichers (1) besteht, die unterschiedlich für eine Bewegungsabschätzung (OP(i)) eines laufenden Makroblocks (M(i,j)) von geradem Rang und für eine Bewegungsabschätzung (OP(i+1)) eines laufenden Makroblocks (M(i+1,j)) von ungeradem Rang ist, wobei der Rang eines Makroblocks eine Funktion seiner sequentiellen Lage in dem Bild ist.

6. Verfahren zur Kompression beweglicher Bilder, nach Anspruch 5, dadurch gekennzeichnet, daß das Verfahren darin besteht, für eine Bewegungsabschätzung (OP(i)) von geradem Rang, die beiden ersten körperlichen Segmente (s1, s2) als Träger der beiden ersten Halb-Makroblöcke (B(i-1,j-1)2, B(i,j-1)1) und die beiden letzten körperlichen Segmente (s3, s4) als Träger der beiden letzten Halb-Makroblöcke (B(i,j-1)2, B(i+1,j-1)1) des Bezugsfensters (R(i)) zu adressieren, und, für eine Bewegungsabchätzung von ungeradem Rang (OP(i+1)), die beiden letzten körperlichen Segmente (s3, s4) als Träger der beiden ersten Halb-Makroblöcke (B(i,j-1)2, B(i+1,j-1)1), und die beiden ersten körperlichen Segmente (s1, s2) als Träger der beiden letzten Halb-Makroblöcke (B(i+1,j-1)2, B(i+2,j-1)1) des Bezugsfensters (R(i+1) zu adressieren.

7. Verfahren zur Kompression beweglicher Bilder, nach Anspruch 6, dadurch gekennzeichnet, daß es darin besteht, jeweils zwischen jeder Bewegungsabschätzung (OP(i)) in den zweiten Cache-Speicher (2) einen Makroblock (M(i,j)) von Pixeln eines laufenden Bildes (I(j)), und in den ersten Cache-Speicher (1) zwei Halb-Makroblöcke (B(i,j-1)2, B(i+1,j-1)1) des vorhergehenden Bildes (I(j-1)) zu laden, wobei zwei andere Halb-Makroblöcke (B(i-1,j-1)2, B(i,j-1)1) des Bezugsfensters (R(i)) bereits für die sich auf den Makroblock (M(i-1,j)) des laufenden Bildes (I(j)) beziehende Bewegungsabschätzung (OP(i-1)) geladen wurden.

8. Verfahren zur Kompression beweglicher Bilder, nach einem der Ansprüche 5 bis 7, dadurch gekennzeichnet, daß für die Adressenberechnungen des ersten Cache-Speichers (1) eine Steuerbefehl-Zustandsmaschine des Operationsprozesses verwendet wird.

9. Verfahren zur Adressierung eines Cache-Speichers (1), der zur Verwendung in einem Operationsprozeß bestimmt ist, bei welchem eine Reihe von Operationen (OP(i)) an zwei Sets bzw. Gruppen von Werten (C(i), R(i)) ausgeführt werden, wobei ein erstes Set bzw. Gruppe einem Set bzw. einer Gruppe (C(i)) von laufenden Werten entspricht und ein zweites Set bzw. Gruppe einem in dem genannten Cache-Speicher (1) gespeicherten Set bzw. Gruppe von Bezugswerten (R(i)) entspricht und wobei wenigstens ein Teil des Bezugssets bzw. der Bezugsgruppe (R(i)) für eine Serie von Operationen (OP(i+1)), die sich auf ein folgendes Set laufender Werte (C(i+1)) beziehen, verwendet wird, dadurch gekennzeichnet, daß das Verfahren in der Unterteilung des Cache-Speichers (1) in vier körperliche Segmente (s1, s2, s3, s4) gleicher Abmessungen, deren jedes jeweils ein logisches Subset bzw. eine logische Untergruppe (B(i)1, B(i)2, B(i)3, B(i)4) des Sets von Bezugswerten (R(i)) aufzunehmen vermag, sowie in der Durchführung einer Adressierung des Cache-Speichers (1) besteht, die unterschiedlich für eine Serie von Operationen (OP(i)) von geradem Rang und für eine Serie von Operationen (OP(i+1)) von ungeradem Rang ist, wobei der Rang einer Serie von Operationen eine Funktion der sequentiellen Stellung der Operationsserie in einer Sequenz von Operationsserien ist.

10. Adressierverfahren nach Anspruch 9, dadurch gekennzeichnet, daß das Verfahren darin besteht, für eine Operationsserie von geradem Rang (OP(i)) die beiden ersten körperlichen Segmente (s1, s2) als Träger der beiden ersten logischen Subsets bzw. Untergruppen (B(i)1, B(i)2) und die beiden letzten körperlichen Segmente (s3, s4) als Träger der beiden letzten logischen Subsets bzw. Untergruppen (B(i)3, B(i)4) zu adressieren, und, für eine Operationsserie von ungeradem Rang (OP(i+1)), die beiden letzten körperlichen Segmente (s3, s4) als Träger der beiden ersten logischen Subsets bzw. Untergruppen (B(i+1)1, B(i+1)2), und die beiden ersten körperlichen Segmente (s1, s2) als Träger der beiden letzten logischen Subsets bzw. Untergruppen (B(i+1)3, B(i+1)4) zu adressieren.
